# EUROPEAN PATENT SPECIFICATION

(11) **EP 2 039 723 B1**
(45) Date of publication and mention of the grant of the patent: **09.03.2011**
(21) Application number: 08253077.5
(22) Date of filing: 19.09.2008
(51) Int. Cl.: C08L 83/08, C08K 5/13

(54) **Room temperature curable organopolysiloxane composition**
Bei Raumtemperatur härtbare Organopolysiloxan-Zusammensetzung
Composition d'organopolysiloxane durcissable à température ambiante

(30) Priority: 21.09.2007 JP 2007244923
(43) Date of publication of application: 25.03.2009
(73) Proprietor: Shin-Etsu Chemical Co., Ltd., Tokyo (JP)
(72) Inventor: Kimura, Tsuneo, Matsuida-Machi Annaka-shi Gunma-ken (JP); Teshigawara, Mamoru, Matsuida-Machi Annaka-shi Gunma-ken (JP)
(74) Representative: Stoner, Gerard Patrick

(56) References cited:
- EP-A- 0 816 436
- WO-A-99/66012
- US-A1- 2004 147 674

## Description

This invention relates to room temperature curable organopolysiloxane compositions, such as are for example useful as silicone-based sealants, adhesives, coating compositions or potting agents. Preferred aspects relate to room temperature curable organopolysiloxane compositions of condensation curing type which have excellent oil resistance and tolerance to heat before cure.

### BACKGROUND

Parts around the automobile engine have been sealed by using an oil-resistant gasket or packing materials made from cork, organic rubber, asbestos, and the like. These materials, however, are expensive, and suffer from the disadvantage of complicated inventory management and process control. As a consequence, FIPG (formed-in place gaskets) has been adopted in such application, and FIPG has been realized by using a room temperature curable silicone rubber composition. FIPG has high reputation for its improved workability, sealability, and heat resistance. However, multi-grade gear oils having a low viscosity and containing a large amount of acidic extreme pressure additive are recently used for the automobile gear oil for transmission and the like in view of improving the fuel economy, and as a consequence, there is a problem that the seals comprising an organosiloxane undergo deterioration during prolonged use at high temperature, causing oil leakage.

To obviate this problem, addition of a basic filler is effective since such basic filler inactivates the acidic extreme pressure additive. Our JP-B-61/023942 (US 4485206) proposes the use of zinc carbonate and/or zinc oxide with thiazole, thiuram, and dithiocarbamate salt. Our JP-B-7/119361 (US 5064898) proposes use of carbon, zinc oxide, zinc carbonate, magnesium oxide, and calcium carbonate in combination with a polysiloxane network containing triorganosiloxy unit and SiO₂ unit.

However, further investigation has revealed that in the so-called "deoximation type (or oxime elimination) room temperature curable silicone rubber composition", using a silane having a dialkyl ketoxime group for the crosslinking agent as well as the above-mentioned basic filler, the composition is vulnerable to the effects of heat before curing. For example, when an engine is started immediately after sealing by FIPG using such room temperature curable silicone rubber composition, the sealant - still in the course of curing - is exposed to a high temperature, and this is found to cause loss of curability, adversely affecting the final sealing properties.

An object of the present invention is to provide a room temperature curable organopolysiloxane composition of condensation curing type which has excellent oil resistance, excellent heat resistance before the curing, excellent curing properties, and excellent sealability when used in sealing around the automobile engine.

The inventors of the present invention have made an intensive study to obviate the problems as described above, and confirmed that the loss of the heat resistance before the curing in the deoximation type room temperature curable silicone rubber composition using above basic filler is a phenomenon which specifically occurs in the presence of the zinc-based filler, and that such loss of the heat resistance before the curing is caused by the thermal decomposition of the silane having a dialkyl ketoxime that has been incorporated as the crosslinking agent. The inventors of the present invention also examined various additives, and found that hindered phenol type radical scavenger is effective in improving the heat resistance before the curing. The inventors further investigated the type and the amount of the hindered phenol type radical scavenger, and the present invention has been accomplished on the bases of such efforts.

Accordingly, the present invention provides a room temperature curable organopolysiloxane composition comprising
(A) 100 parts by weight of a diorganopolysiloxane endcapped at both ends of the molecular chain with hydroxy group represented by the following formula:

   HO-(R₂SiO)ₙ-H

   wherein R independently represents an unsubstituted or substituted monovalent hydrocarbon group, and n represents an integer of at least 10,
(B) 1 to 20 parts by weight of a silane having at least two dialkyl ketoxime groups in its molecule represented by the following formula:

   R¹ₓ-Si(-O-N=CR²R³)₄₋ₓ

   wherein R¹ represents an unsubstituted or substituted monovalent hydrocarbon group, and R² and R³ independently represent an unsubstituted or substituted monovalent hydrocarbon group, or R² and R³ may together form a ring with the carbon atom to which they are bonded to in which case the R² and R³ independently represent an alkylene group, and x represents an integer of 0 to 2, and/or a partial hydrolysate thereof,
(C) 2 to 200 parts by weight of a filler selected from the group consisting of zinc carbonate, zinc oxide, zinc hydroxide, and mixtures thereof,
(D) 0.01 to 5 parts by weight of a curing catalyst, and
(E) 0.01 to 5 parts by weight of a hindered phenol compound having a molecular weight of at least 400.

In this composition, the component (D) is preferably a dioctyltin diester compound, and the hindered phenol compound of the component (E) is preferably the one having a molecular weight of at least 500.

### EFFECTS

We have found that compositions as proposed herein enable a combination of excellent oil resistance, excellent heat resistance before curing, and excellent sealing properties e.g. when used in sealing parts in or around an automobile engine.

### FURTHER EXPLANATIONS; OPTIONS AND PREFERENCES

The room temperature curable organopolysiloxane composition of the present invention contains the following components (A) to (E) as critical components.

### Component (A)

Component (A) is a diorganopolysiloxane endcapped at both ends of the molecular chain with hydroxy group as represented by the following formula:

HO-(R₂SiO)ₙ-H.

This component is the base polymer of the present composition.

In this general formula, R independently represents an unsubstituted or substituted monovalent hydrocarbon group such as an alkyl group having 1 to 20 carbon atom, and more preferably 1 to 8 carbon atoms, an alkenyl group having 2 to 20 carbon atoms, and more preferably 2 to 8 carbon atoms, an aryl group having 6 to 20 carbon atoms, and more preferably, 6 to 12 carbon atoms, and any of these hydrocarbon groups having some or all of the hydrogen atoms substituted with a halogen atom such as fluorine, typically a halogen-substituted alkyl group having 1 to 20 carbon atoms. Exemplary alkyl groups include methyl group, ethyl group, propyl group, and cyclohexyl group ("alkyl" is used in the general sense covering branched and cyclic groups). Exemplary alkenyl groups include vinyl group and allyl group. Exemplary aryl groups include phenyl group, and exemplary halogen-substituted alkyl groups include 3,3,3-trifluoropropyl group. Among these, the preferred are methyl group, vinyl group, and phenyl group, and the most preferred is methyl group.

In the general formula, n is an integer of at least 10, preferably selected so that the diorganopolysiloxane has a viscosity at 25°C of preferably 10 to 1,000,000 mPa·s, more preferably 100 to 100,000 mPa·s, and most preferably 300 to 50,000 mPa·s. An excessively low viscosity may result in the insufficient mechanical properties of the cured product while an excessively high viscosity may result in the unduly increased viscosity of the composition, which in turn results in the loss of workability. In the present disclosure, viscosity is the value measured by a rotary viscometer.

### Component (B)

Component (B) is a silane and/or its hydrolysate. The silane has at least two dialkyl ketoxime groups in its molecule. It is typically represented by the following formula:

R¹ₓ-Si(-O-N=CR²R³)₄₋ₓ.

This component serves the crosslinking agent of the composition.

In the formula, R¹ represents an unsubstituted or substituted monovalent hydrocarbon group, and R² and R³ independently represent an unsubstituted or substituted monovalent hydrocarbon group, or R² and R³ may together form a ring with the carbon atom to which they are bonded to in which case the R² and R³ independently represent an alkylene group, and x represents an integer of 0 to 2.

In this general formula, R¹ independently represents an unsubstituted or substituted monovalent hydrocarbon group such as an alkyl group having 1 to 20 carbon atom, and more preferably 1 to 8 carbon atoms, an alkenyl group having 2 to 20 carbon atoms, and more preferably 2 to 8 carbon atoms, an aryl group having 6 to 12 carbon atoms, an aralkyl group having 6 to 20 carbon atoms, and more preferably 6 to 12 carbon atoms, and any of these hydrocarbon groups having some or all of the hydrogen atoms substituted with halogen such as fluorine, typically a halogen-substituted alkyl group having 1 to 20 carbon atoms. Exemplary alkyl groups include methyl group, ethyl group, propyl group, butyl group, and cyclohexyl group; and exemplary alkenyl groups include vinyl group and allyl group. Exemplary aryl groups include phenyl group, and exemplary aralkyl groups include benzyl group, and exemplary substituted alkyl groups include 3,3,3-trifluoropropyl group. Among these, the preferred are methyl group, ethyl group, vinyl group, and phenyl group.

The monovalent hydrocarbon group of R² and R³ is preferably an alkyl group or a haloalkyl group. Exemplary alkyl groups include those having 1 to 8 carbon atoms, and more preferably 1 to 6 carbon atoms such as methyl group, ethyl group, propyl group, isopropyl group, butyl group, and isobutyl group. More preferably, R² and R³ are methyl group, ethyl group, or isobutyl group. Alternatively, R² and R³ may be alkylene groups having e.g. 1 to 6 carbon atoms, forming a ring (generally a 5 to 8 membered ring) with the carbon atom to which they are bonded to. Exemplary such rings include cyclopentyl group and cyclohexyl group.

This crosslinking agent may be obtained by dehydrochlorination of the corresponding chlorosilane and the dialkyl ketoxime compound. If desired, a scavenger for the hydrochloric acid such as triethylamine may be added to the reaction system.

This component (B), namely, the silane and/or its hydrolysate having at least two dialkyl ketoxime groups in its molecule may be incorporated in the composition at an amount of 1 to 20 parts by weight, and preferably 3 to 15 parts by weight in relation to 100 parts by weight of the diorganopolysiloxane (the component (A)). Sufficient storage stability is not realized at an amount of less than 1 parts by weight, whereas incorporation at an amount in excess of 20 parts by weight will invite loss of depth curability of the composition, and hence, loss of workability.

### Component (C)

The zinc-based filler, preferably selected from zinc carbonate, zinc oxide, zinc hydroxide, and mixtures thereof, of the component (C) has the function of improving oil resistance. When an automobile engine is oil-sealed by using this composition, this components acts as an inactivating agent for the acidic extreme pressure additive in the automobile oil to thereby maintain sealing of the sealed part.

This zinc-based filler selected from zinc carbonate, zinc oxide, zinc hydroxide, and mixtures thereof of the component (C) may be used at an amount of 2 to 200 parts by weight, and preferably 5 to 150 parts by weight in relation to 100 parts by weight of the diorganopolysiloxane (the component (A)). Oil resistance will be insufficient at the amount of less than 2 parts by weight, while use of this component in excess of 200 parts by weight will invite loss of depth curability of the composition, and hence, loss of workability.

### Component (D)

The curing catalyst of component (D) functions in the composition of the present invention as a catalyst for the condensation between the component (A) and the component (B). The curing catalyst of component (D) may be used as a single compound or a mixture of two or more compounds. Examples of the component (D) include tin catalysts such as tin octoate, dimethyltin diversatate, dibutyldimethoxytin, dibutyltin diacetate, dibutyltin dioctoate, dibutyltin dilaurate, dibutyltin dibenzylmaleate, dioctyltin dilaurate, and tin chelate; strong basic compounds such as guanidine, 1,8-diazabicyclo [5.4.0]-7-undecene (DBU); alkoxysilane having such group; titanate ester or titanium chelate compound such as tetraisopropoxy titanium, tetra-n-butoxy titanium, tetrakis(2-ethylhexoxy) titanium, dipropoxy bis(acetylacetonate) titanium, and titanium isopropoxy octylene glycol. The preferred are tin catalysts.

The component (D) is incorporated at 0.01 to 5 parts by weight, and preferably at 0.02 to 3 parts by weight in relation to 100 parts by weight of the diorganopolysiloxane (the component (A)). Curing properties will be insufficient at the amount less than 0.01 parts by weight, and incorporation in excess of 5 parts by weight will result in the loss of durability of the composition.

### Component (E)

In the composition of the present invention, the hindered phenol compound of the component (E) has the function of preventing radical decomposition of the crosslinking agent (the component (B)) by the zinc-based filler (the component (C)). Furthermore, correlation has been found between the molecular weight of the hindered phenol and the heat resistance of the composition before curing, and when the heat resistance at the same content is compared, the heat resistance before the curing tends to be superior when the hindered phenol has a higher molecular weight. Economically, the hindered phenol having a low molecular weight is relatively disadvantageous since incorporation of a larger amount would be required to realize the desired effect. In the composition of the present invention, the hindered phenol preferably has a molecular weight of at least 400, more preferably at least 500, and most preferably at least 600. The upper limit of the molecular weight is preferably up to 2000, more preferably up to 1500, most preferably up to 1200.

Examples of the hindered phenol compound which may be used include those presently available as Adekastab AO series manufactured by ADEKA Corporation including Adekastab AO-80 (molecular weight 521), and Irganox 259 (molecular weight 636), Irganox 1076 (molecular weight 476), Irganox 1330 (molecular weight 774), and Irganox 3114 (molecular weight 784) manufactured by Ciba Specialty Chemicals, which may be used alone or in combination of two or more. The compound formulae are as follows.

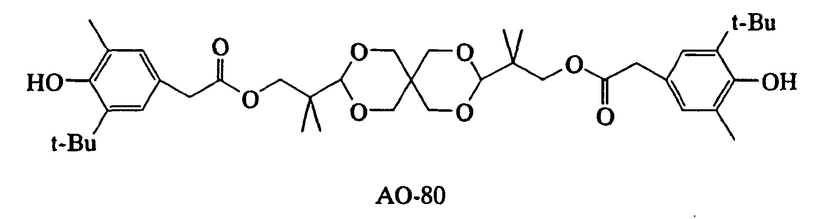

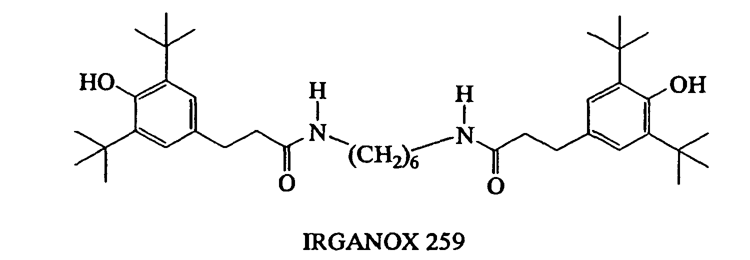

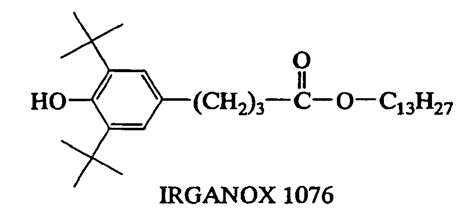

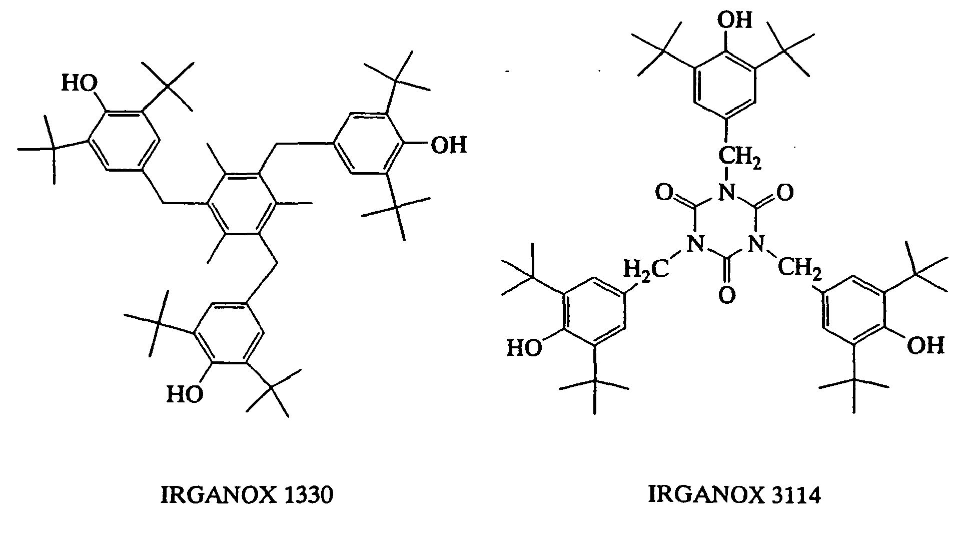

Amount of the component (E) is not particularly limited, and it may be used at an effective amount. Preferably, it may be used at 0.01 to 5 parts by weight, and more preferably at 0.02 to 3 parts by weight in relation to 100 parts by weight of the diorganopolysiloxane (the component (A)). When used at less than 0.01 parts by weight, heat resistance of the composition before curing will be insufficient whereas incorporation at an amount of 5 parts by weight is economically disadvantageous.

### Other components

In addition to the components as described above, the composition of the present invention may also have incorporated therein additives known in the art as adequate for incorporating in the room temperature curable organopolysiloxane composition. Exemplary such additives include reinforced/non-reinforced filler such as fumed silica, wet silica, sedimentary silica, and calcium carbonate; metal oxides such as aluminum oxide and aluminum hydroxide; and carbon black, glass beads, glass balloon, resin beads, and resin balloon. These fillers may be the one which has been optionally treated by a known surface treating agent. In the case of filler, it may be incorporated at an amount of 1 to 200 parts by weight, and in particular, 2 to 150 parts by weight in relation to 100 parts by weight of component (A). The composition may also include a silane coupling agent as a tackifier component, a polyether as a thixotropic agent, a non-reactive dimethylsilicone oil or isoparaffin as a plasticizer, and a network polysiloxane polymer comprising trimethylsiloxy unit and Si02 unit as an agent for increasing the crosslinking degree. If desired, the composition may also include a colorant such as a pigment, a dye, or a fluorescent brightening agent; a bioreactive additive such as a fungicide, an antibacterial agent, a cockroach repellent, or an antifouling agent; a bleed oil such as a non-reactive phenyl silicone oil or a fluorosilicone oil, a surface modifying agent which is incompatible with the silicone such as an organic fluid; or a solvent such as toluene, xylene, solvent gasoline, cyclohexane, methylcyclohexane, or a low boiling isoparaffin.

Concerning number ranges, see the Note on page 16.

### Preparation and curing of the composition

The room temperature curable organopolysiloxane composition of the present invention can be produced by homogeneously mixing the components (A) to (E) in a kneader of the type known in the art such as a planetary mixer to produce a one part composition. For convenient preparation of a two part composition, a first part comprising the components (A), (B), (C), and (D) and any optional component (E) and a second part comprising the components (A) and (C) and the optional component (E) may be separately prepared, and these first and second parts may be mixed with a static or dynamic mixer immediately before the use.

The curing may be accomplished by leaving the composition at room temperature (5 to 40°C) generally for about 24 to 168 hours.

### Applications of the composition

Room temperature curing organopolysiloxane compositions of the present application are well adapted for use as a sealant, adhesive, coating agent, and potting agent, and in particular as a sealant for automobile use.

### EXAMPLES

Next, the present invention is described in further detail by referring to the following Examples and Comparative Examples which by no means limit the scope of the present invention. In the following Examples and Comparative Examples, viscosity is the value measured by a rotary viscometer at 25°C.

### Example 1

100 parts by weight of a dimethylpolysiloxane endcapped at both ends of the molecular chain with hydroxy group having a viscosity of 50,000 mPa·s, 100 parts by weight of zinc oxide, 10 parts by weight of fumed silica having a specific surface area of 150 m²/g surface treated with dimethyldichlorosilane, 10 parts by weight of vinyl tris methyl ethyl ketoxime silane, 0.1 parts by weight of dibutyltin dilaurate, 2 parts by weight of γ-aminopropyltriethoxysilane, and 0.25 parts by weight of Adekastab AO-80 (hindered phenol type; molecular weight, 521) were mixed to homogeneity to prepare Composition 1.

### Example 2

100 parts by weight of a dimethylpolysiloxane endcapped at both ends of the molecular chain with hydroxy group having a viscosity of 50,000 mPa·s, 100 parts by weight of zinc oxide, 10 parts by weight of fumed silica having a specific surface area of 150 m²/g surface treated with dimethyldichlorosilane, 10 parts by weight of vinyl tris methyl ethyl ketoxime silane, 0.1 parts by weight of dibutyltin dilaurate, 2 parts by weight of γ-aminopropyltriethoxysilane, and 0.25 parts by weight of Irganox 3114 (hindered phenol type; molecular weight, 784) were mixed to homogeneity to prepare Composition 2.

### Example 3

100 parts by weight of a dimethylpolysiloxane endcapped at both ends of the molecular chain with hydroxy group having a viscosity of 50,000 mPa·s, 100 parts by weight of zinc oxide, 10 parts by weight of fumed silica having a specific surface area of 150 m²/g surface treated with dimethyldichlorosilane, 10 parts by weight of vinyl tris methyl ethyl ketoxime silane, 0.1 parts by weight of dibutyltin dilaurate, 2 parts by weight of γ-aminopropyltriethoxysilane, and 0.25 parts by weight of Irganox 1330 (hindered phenol type; molecular weight, 774) were mixed to homogeneity to prepare Composition 3.

### Example 4

100 parts by weight of a dimethylpolysiloxane endcapped at both ends of the molecular chain with hydroxy group having a viscosity of 50,000 mPa·s, 100 parts by weight of zinc oxide, 10 parts by weight of fumed silica having a specific surface area of 150 m²/g surface treated with dimethyldichlorosilane, 10 parts by weight of vinyl tris methyl ethyl ketoxime silane, 0.1 parts by weight of dibutyltin dilaurate, 2 parts by weight of γ-aminopropyltriethoxysilane, and 0.25 parts by weight of Irganox 1076 (hindered phenol type; molecular weight, 476) were mixed to homogeneity to prepare Composition 4.

### Comparative Example 1

100 parts by weight of a dimethylpolysiloxane endcapped at both ends of the molecular chain with hydroxy group having a viscosity of 50,000 mPa·s, 100 parts by weight of zinc oxide, 10 parts by weight of fumed silica having a specific surface area of 150 m²/g surface treated with dimethyldichlorosilane, 10 parts by weight of vinyl tris methyl ethyl ketoxime silane, 0.1 parts by weight of dibutyltin dilaurate, and 2 parts by weight of γ-aminopropyltriethoxysilane were mixed to homogeneity to prepare Composition 5.

### Comparative Example 2

100 parts by weight of a dimethylpolysiloxane endcapped at both ends of the molecular chain with hydroxy group having a viscosity of 50,000 mPa·s, 100 parts by weight of zinc oxide, 10 parts by weight of fumed silica having a specific surface area of 150 m²/g surface treated with dimethyldichlorosilane, 10 parts by weight of vinyl tris methyl ethyl ketoxime silane, 0.1 parts by weight of dibutyltin dilaurate, 2 parts by weight of γ-aminopropyltriethoxysilane, and 0.25 parts by weight of Adekastab L77Y (hindered phenol type; molecular weight, 484) were mixed to homogeneity to prepare Composition 6.

### Comparative Example 3

100 parts by weight of a dimethylpolysiloxane endcapped at both ends of the molecular chain with hydroxy group having a viscosity of 50,000 mPa·s, 100 parts by weight of zinc oxide, 10 parts by weight of fumed silica having a specific surface area of 150 m²/g surface treated with dimethyldichlorosilane, 10 parts by weight of vinyl tris methyl ethyl ketoxime silane, 0.1 parts by weight of dibutyltin dilaurate, 2 parts by weight of γ-aminopropyltriethoxysilane, and 0.25 parts by weight of Adekastab LA-63P (hindered amine type; molecular weight, 1507) were mixed to homogeneity to prepare Composition 7.

### Comparative Example 4

100 parts by weight of a dimethylpolysiloxane endcapped at both ends of the molecular chain with hydroxy group having a viscosity of 50,000 mPa·s, 100 parts by weight of zinc oxide, 10 parts by weight of fumed silica having a specific surface area of 150 m²/g surface treated with dimethyldichlorosilane, 10 parts by weight of vinyl tris methyl ethyl ketoxime silane, 0.1 parts by weight of dibutyltin dilaurate, 2 parts by weight of γ-aminopropyltriethoxysilane, and 0.25 parts by weight of 2,6-di-tert-butyl-p-cresol (hindered phenol type; molecular weight, 220) were mixed to homogeneity to prepare Composition 8.

The resulting composition was placed in a sealable metal container, and the container was sealed. The container was then placed in a drier at various temperatures for 100 hours. After removing from the drier, the container was opened, and the composition was allowed to stand in an environment of 23°C and relative humidity of 50% to confirm the curability. The sample which cured within 24 hours was evaluated "A", and the sample which failed to cure within 24 hours was evaluated "B". The results are shown in Table 1.

**Table 1**

| | Example | | | | Comparative Example | | | |
|---|---|---|---|---|---|---|---|---|
| | 1 | 2 | 3 | 4 | 1 | 2 | 3 | 4 |
| Composition No. | 1 | 2 | 3 | 4 | 5 | 6 | 7 | 8 |
| 100° C × 100 hours | A | A | A | A | B | B | B | B |
| 120° C × 100 hours | A | A | A | B | B | B | B | B |
| 140° C × 100 hours | B | A | A | B | B | B | B | B |
| Molecular weight | 521 | 784 | 774 | 476 | - | 484 | 1507 | 220 |

### Example 5

100 parts by weight of a dimethylpolysiloxane endcapped at both ends of the molecular chain with hydroxy group having a viscosity of 20,000 mPa·s, 10 parts by weight of basic zinc carbonate, 10 parts by weight of fumed silica having a specific surface area of 200 m²/g surface treated with dimethyldichlorosilane, 10 parts by weight of vinyl tris methyl isobutyl ketoxime silane, 0.1 parts by weight of dibutyltin dilaurate, 2 parts by weight of ethylene diaminopropyltrimethoxysilane, and 0.25 parts by weight of Irganox 3114 (hindered phenol type; molecular weight, 784) were mixed to homogeneity to prepare Composition 9.

### Comparative Example 5

100 parts by weight of a dimethylpolysiloxane endcapped at both ends of the molecular chain with hydroxy group having a viscosity of 20,000 mPa·s, 10 parts by weight of basic zinc carbonate, 10 parts by weight of fumed silica having a specific surface area of 200 m²/g surface treated with dimethyldichlorosilane, 10 parts by weight of vinyl tris methyl isobutyl ketoxime silane, 0.1 parts by weight of dibutyltin dilaurate, and 2 parts by weight of ethylene diaminopropyltrimethoxysilane were mixed to homogeneity to prepare Composition 10.

The resulting composition was placed in a sealable metal container, and the container was sealed. The container was then placed in a drier at various temperatures for 100 hours. After removing from the drier, the container was opened, and the composition was allowed to stand in an environment of 23°C and relative humidity of 50% to confirm the curability. The sample which cured within 24 hours was evaluated "A", and the sample which failed to cure within 24 hours was evaluated "B". The results are shown in Table 2.

**Table 2**

| | Example | Comparative Example |
|---|---|---|
| | 5 | 5 |
| Composition No. | 9 | 10 |
| 100° C × 100 hours | A | B |
| 120° C × 100 hours | A | B |
| 140° C × 100 hours | B | B |
| Molecular weight | 784 | - |

Note

In respect of numerical ranges disclosed herein it will of course be understood that in the normal way the technical criterion for the upper limit is different from the technical criterion for the lower limit, i.e. the upper and lower limits are intrinsically distinct proposals.

## Claims

1. A room temperature curable organopolysiloxane composition comprising
(A) 100 parts by weight of diorganopolysiloxane endcapped at both ends of the molecular chain with hydroxy group and represented by the following formula:
HO- (R₂SIO)ₙ-H
wherein each R independently represents unsubstituted or substituted monovalent hydrocarbon group, and n represents an integer of at least 10,
(B) 1 to 20 parts by weight of silane having at least two dialkyl ketoxime groups in its molecule represented by the following formula:
R¹ₓ-Si(-O-N=CR²R³)₄₋ₓ
wherein R¹ represents an unsubstituted or substituted monovalent hydrocarbon group, and R² and R³ independently represent an unsubstituted or substituted monovalent hydrocarbon group, or R² and R³ may together form a ring with the carbon atom to which they are bonded to in which case R² and R³ independently represent alkylene group, and x represents an integer of 0 to 2, and/or a partial hydrolysate of such silane;
(C) 2 to 200 parts by weight of filler selected from zinc carbonate, zinc oxide, zinc hydroxide, and mixtures thereof,
(D) 0.01 to 5 parts by weight of curing catalyst, and
(E) 0.01 to 5 parts by weight of hindered phenol compound having a molecular weight of at least 400.

2. A room temperature curable organopolysiloxane composition according to claim 1 wherein the curing catalyst (D) is a dioctyltin diester compound.

3. A room temperature curable organopolysiloxane composition according to claim 1 or 2 wherein the hindered phenol compound (E) has a molecular weight of at least 500.

4. Use of a room temperature curable organopolysiloxane composition according to any one of claims 1 to 3 as a sealant, adhesive, coating agent or potting agent, preferably as a sealant in an automobile and/or in relation to an engine.

## Patentansprüche

1. Bei Raumtemperatur härtbare Organopolysiloxan-Zusammensetzung, umfassend
(A) 100 Gewichtsteile eines Diorganopolysiloxans, das an beiden Enden der Molekülkette mit einer Hydroxygruppe endverkappt ist und der folgenden Formel entspricht:
HO-(R₂SiO)ₙ-H,
worin die R jeweils unabhängig voneinander eine unsubstituierte oder substituierte einwertige Kohlenwasserstoffgruppe darstellen und n für eine ganze Zahl von zumindest 10 steht,
(B) 1 bis 20 Gewichtsteile eines Silans mit zumindest zwei Dialkylketoxim-Gruppen im Molekül, das der folgenden Formel entspricht:
R¹ₓ-Si(-O-N=CR²R³)₄₋ₓ,
worin R¹ für eine unsubstituierte oder substituierte einwertige Kohlenwasserstoffgruppe steht und R² und R³ jeweils unabhängig voneinander eine unsubstituierte oder substituierte einwertige Kohlenwasserstoffgruppe darstellen oder R² und R³ gegebenenfalls zusammen mit dem Kohlenstoffatom, an das sie gebunden sind, einen Ring bilden, wobei in diesem Fall R² und R³ jeweils unabhängig voneinander eine Alkylengruppe darstellen, und x eine ganze Zahl von 0 bis 2 ist, und/oder ein partielles Hydrolysat eines solchen Silans;
(C) 2 bis 200 Gewichtsteile eines Füllstoffs, der aus Zinkcarbonat, Zinkoxid, Zinkhydroxid und Gemischen davon ausgewählt ist,
(D) 0,01 bis 5 Gewichtsteile eines Härtungskatalysators, und
(E) 0,01 bis 5 Gewichtsteile einer sterisch gehinderten Phenolverbindung mit einem Molekulargewicht von zumindest 400.

2. Bei Raumtemperatur härtbare Organopolysiloxan-Zusammensetzung nach Anspruch 1, worin der Härtungskatalysator (D) eine Dioctylzinndiester-Verbindung ist.

3. Bei Raumtemperatur härtbare Organopolysiloxan-Zusammensetzung nach Anspruch 1 oder 2, worin die sterisch gehinderte Phenolverbindung (E) ein Molekulargewicht von zumindest 500 aufweist.

4. Verwendung einer bei Raumtemperatur härtbaren Organopolysiloxan-Zusammensetzung nach einem der Ansprüche 1 bis 3 als Dichtungsmittel, Klebstoff, Beschichtungsmittel oder Vergussmittel, vorzugsweise als Dichtungsmittel in einem Kraftfahrzeug und/oder in Verbindung mit einem Motor.

## Revendications

1. Composition d'organopolysiloxane durcissable à la température ambiante comprenant
(A) 100 parties en poids de diorganopolysiloxane coiffé en bout aux deux extrémités de la chaîne moléculaire par un groupe hydroxy et représenté par la formule suivante :
HO- (R₂SiO) ₙ-H
dans laquelle chaque R représente indépendamment un groupe hydrocarboné monovalent substitué ou non substitué, et n représente un entier d'au moins 10,
(B) 1 à 20 parties en poids d'un silane ayant au moins deux groupes dialkylcétoxime dans sa molécule, représenté par la formule suivants :
R¹ₓ-Si (-O-N=CR²R³)₄₋ₓ
dans laquelle R¹ représente un groupe hydrocarboné monovalent substitué ou non substitué, et R² et R³ représentent indépendamment un groupe hydrocarboné monovalent substitué ou non substitué, ou bien R² et R³ peuvent former ensemble un cycle avec l'atome de carbone auquel ils sont liés, auquel cas R² et R³ représentent indépendamment un groupe alkylène, et x représente un entier de 0 à 2, et/ou d'un hydrolysat partiel de ce silane ;
(C) 2 à 200 parties en poids d'une charge choisie parmi le carbonate de zinc, l'oxyde de zinc, l'hydroxyde de zinc et leurs mélanges,
(D) 0,01 à 5 parties en poids d'un catalyseur de durcissement, et
(E) 0,01 à 5 parties en poids d'un composé phénolique encombré ayant une masse moléculaire d'au moins 400.

2. Composition d'organopolysiloxane durcissable à la température ambiante selon la revendication 1, dans laquelle le catalyseur de durcissement (D) est un composé diester de dioctyl-étain.

3. Composition d'organopolysiloxane durcissable à la température ambiante selon la revendication 1 ou 2, dans laquelle le composé phénolique encombré (E) a une masse moléculaire d'au moins 500.

4. Utilisation d'une composition d'organopoly-siloxane durcissable à la température ambiante selon l'une quelconque des revendications 1 à 3 en tant qu'agent d'étanchéité, adhésif, agent de revêtement ou agent d'enrobage, de préférence en tant qu'agent d'étanchéité dans une automobile et/ou en relation avec un moteur.
